# EUROPÄISCHE PATENTSCHRIFT

(11) **EP 3 436 320 B1**
(45) Veröffentlichungstag und Bekanntmachung des Hinweises auf die Patenterteilung: **26.08.2020**
(21) Anmeldenummer: 17705384.0
(22) Anmeldetag: 15.02.2017
(51) Int. Cl.: B60T 8/40

(54) **BREMSKRAFTSIMULATOR FÜR EIN KRAFTFAHRZEUG**
BRAKING FORCE SIMULATOR FOR A MOTOR VEHICLE
SIMULATEUR DE FORCE DE FREINAGE POUR VÉHICULE AUTOMOBILE

(30) Priorität: 01.04.2016 DE 102016205407
(43) Veröffentlichungstag der Anmeldung: 06.02.2019
(73) Patentinhaber: Robert Bosch GmbH, 70442 Stuttgart (DE)
(72) Erfinder: HANSMANN, Simon, Plymouth 48170 (US); KUNZ, Armin, 71254 Ditzingen (DE); KISTNER, Matthias, 74626 Bretzfeld (DE); HASLSTEINER, Juergen, 87452 Altusried (DE)
(86) Internationale Anmeldenummer: PCT/EP2017/053340
(87) Internationale Veröffentlichungsnummer: WO 2017/167495

(56) Entgegenhaltungen:
- EP-A1- 1 526 050
- EP-A1- 2 168 824
- WO-A1-2015/104122
- DE-A1- 19 651 153
- JP-A- 2006 256 408
- JP-A- 2010 000 925
- JP-A- 2014 073 735
- US-A- 5 729 979

## Beschreibung

Die Erfindung betrifft einen Bremskraftsimulator für ein Kraftfahrzeug, mit einem Kolben, der mit einem betätigbaren Bremspedal des Kraftfahrzeugs wirkverbunden/wirkverbindbar und in einem Zylinder axial verlagerbar geführt ist, wobei in dem Zylinder wenigstens ein Federelement angeordnet ist, das der Bewegung des Kolbens in eine Richtung mit einer Federkraft entgegen wirkt.

Ferner betrifft die Erfindung eine Bremseinrichtung mit einem derartigen Bremskraftsimulator.

### Stand der Technik

Bremskraftsimulatoren und Bremseinrichtungen der eingangs genannten Art sind aus dem Stand der Technik bekannt. In hydraulischen Bremssystemen von Kraftfahrzeugen werden Hauptbremszylinder eingesetzt, um die von einem Fahrer mechanisch aufgebrachte Bremskraft in das hydraulische Bremssystem zu übersetzen. Dazu ist die Bremspedaleinrichtung mit einem in dem Hauptbremszylinder verschiebbar gelagerten Kolben gekoppelt. Durch das Verschieben wird in einer ersten Druckkammer ein hydraulischer Druck erzeugt, der dann in dem mit dem Hauptbremszylinder verbundenen Bremskreis aufgebaut wird, um eine oder mehrere Radbremsen der Bremseinrichtung hydraulisch zu betätigen. Aktuelle Entwicklungen sehen vor, dass die Bremskraft in Radbremsen nicht mehr direkt durch den Fahrer, sondern vielmehr durch elektrisch ansteuerbare Aktuatoren bereitgestellt wird, die dann die jeweilige Bremskraft elektromotorisch oder elektrohydraulisch an den Radbremsen zur Verfügung stellen. Bei einem solchen Bremssystem, bei dem die direkte mechanische/hydraulische Kopplung zwischen Bremspedal und Radbremse unterbrochen ist, fehlt für den Fahrer eine fühlbare Rückmeldung am Bremspedal über die von ihm aufgebrachte Bremskraft. Damit fällt dem Fahrer ein sensibles Betätigen des Bremspedals besonders schwer. Damit der Fahrer nicht das Gefühl für den Bremsvorgang verliert, sind daher Bremskraftsimulatoren, die auch Pedalgefühlssimulatoren genannt werden, bekannt, die dem Fahrer trotz der Trennung der direkten Verbindung ein Gefühl beziehungsweise ein Feedback über die von ihm eingeleitete Bremskraft geben. Bekannte Bremskraftsimulatoren weisen ein Federelement auf, das der durch den Fahrer aufgebrachten Bremskraft entgegenwirkt. Dazu ist das Federelement einem durch das Bremspedal verlagerbaren Kolben zugeordnet, sodass der Fahrer beim Betätigen des Bremspedals den Kolben entgegen der Federkraft des Federelements bewegt und dadurch das Federelement spannt. Üblicherweise ist das Federelement als metallische Schraubenfeder ausgebildet. Damit erhöht sich der Gegendruck für den Fahrer mit dem Bewegungsweg des Kolbens spürbar, wodurch er ein Gefühl für den Bremsvorgang erhält.

Aus der Offenlegungsschrift WO 2015/104122 A1 ist bereits ein Bremskraftsimulator bekannt, der als Federelement ein Elastomerelement aufweist. Ein ähnlicher Bremskraftsimulator ist auch der Offenlegungsschrift US 5,729,979 A sowie aus den Offenlegungsschriften DE 196 51153 A1, JP 2006-256408 A, EP 2 168 824 A1 und JP 2010-000925 A bereits bekannt.

### Offenbarung der Erfindung

Der erfindungsgemäße Bremskraftsimulator mit den Merkmalen des Anspruchs 1 hat den Vorteil, dass eine verbesserte Kraft-Weg-Kennlinie des Bremskraftsimulators erzielt wird, welche dem Fahrer ein verbessertes haptisches Feedback bei einem Bremsvorgang vermittelt. Erfindungsgemäß wird dies dadurch erreicht, dass das Federelement als Elastomerelement ausgebildet ist. Dadurch lassen sich gewünschte elastische Eigenschaften des Federelements noch gezielter erreichen, insbesondere auch durch unterschiedliche Geometrien des Federelements, welche vorteilhaft für das Bremsgefühl sind. Durch die Ausbildung als Elastomerelement sind diese Varianten kostengünstig und mit einem geringen Herstellungsaufwand realisierbar. Das Elastomerelement kann dabei auf einfache Art und Weise ein bereits bestehendes Federelement ersetzen, sodass auch eine nachträgliche Anpassung des Bremskraftsimulators möglich ist.

Bevorzugt ist vorgesehen, dass das Elastomerelement zumindest im Wesentlichen aus Ethylen-Propylen-Dien-Kautschuk und/oder aus Polyurethan gefertigt ist. Durch die Verwendung von Polyurethan wird der Vorteil erreicht, dass auch bei höheren Temperaturveränderungen die haptische Rückmeldung an einen Fahrer gleich bleibt. Das Material ist verhältnismäßig temperaturunabhängig. Darüber hinaus weist das Elastomerelement aus Polyurethan bei Stauchung eine nur sehr geringe Querdehnung auf, sodass die Verwendung des Elastomerelements aus Polyurethan Vorteile in Bezug auf den notwendigen Bauraum aufweist. Ethylen-Propylen-Dien-Kautschuk hat hingegen den Vorteil einer kostengünstigen Fertigung und einer hohen Belastbarkeit.

Gemäß einer bevorzugten Weiterbildung der Erfindung ist vorgesehen, dass das Elastomerelement zylinderförmig ausgebildet und koaxial in dem Zylinder angeordnet ist. Die Längsachse des Elastomerelements erstreckt sich somit in Bewegungsrichtung des Kolbens, sodass das Elastomerelement axial bei einer Betätigung des Kolbens gestaucht und gegebenenfalls radial gedehnt wird. Das Elastomerelement ist damit außerdem vorteilhaft auch in dem Zylinder geführt beziehungsweise führbar, sodass beispielsweise ein Verklemmen des Elastomerelements sicher verhindert ist. Dadurch ist die Herstellung des Elastomerelements besonders einfach und kostengünstig. Auch ist eine Fehlmontage des Elastomerelements in dem Bremskraftsimulator nicht möglich. Optional ist vorgesehen, dass dem Elastomerelement zusätzlich eine herkömmliche Schraubenfeder zur Unterstützung zugeordnet ist, welche die Kraft-Weg-Kennlinie des Bremskraftsimulators weiter vorteilhaft beeinflusst.

Erfindungsgemäß ist vorgesehen, dass das Elastomerelement mit einem ersten Ende flächig an einem Boden des Zylinders anliegt. Damit weist das Elastomerelement eine große Aufstandsfläche auf dem Boden auf, an welcher es sich abstützt, wodurch insbesondere hohe Kräfte von dem Kolben auf das Elastomerelement übertragen werden können.
Gemäß einer nicht erfindungsgemäßen Ausführungsform ist vorgesehen, dass ein zweites Ende des Elastomerelements eben und orthogonal zur Längsachse des Elastomerelements ausgebildet ist. Damit ist das Elastomerelement insgesamt als Zylinder ausgebildet. Zweckmäßigerweise ist die Stirnseite des ersten Endes eben und orthogonal zur Längsachse des Elastomerelements ausgebildet, um eine stabile Aufstandsfläche zu gewährleisten.

Gemäß einer nicht erfindungsgemäßen Ausführungsform ist vorgesehen, dass das zweite Ende kegelstumpfförmig ausgebildet ist. Dadurch ergibt sich bei der Beaufschlagung des Elastomerelements durch den Kolben eine vorteilhafte Verformung beziehungsweise ein vorteilhafter Kraftverlauf, der die Kraft-Weg-Kennlinie des Bremskraftsimulators optimiert. Insbesondere wird dadurch erreicht, dass zu Beginn der Bewegung des Kolbens entgegen der Kraft des Federelements eine geringere Federkraft entgegenwirkt, die mit zunehmendem Bewegungsweg zunimmt.

Weiterhin ist bevorzugt alternativ vorgesehen, dass das zweite Ende des Elastomerelements kugelförmig ausgebildet ist. Dadurch ergibt sich an dem Kolben insbesondere keine flächige Auflagestelle, sondern zunächst ein Auflagepunkt, an welchem der Kolben die Kugelform berührt. Hierdurch ergibt sich ebenfalls eine vorteilhafte Kraft-Weg-Kennlinie des Bremskraftsimulators. Vorzugsweise weist das zweite Ende einen zylinderförmigen Vorsprung auf, an dessen Ende die Kugelform ausgebildet ist. Dadurch wird das Verhalten des Bremskraftsimulators weiter vorteilhaft beeinflusst. Insbesondere ergeben sich dadurch eine erste Axialanschlagsfläche an der Kugelform und eine zweite Axialanschlagsfläche an dem anderen Ende des Elastomerelements, worauf später nochmals näher eingegangen wird.

Gemäß einer bevorzugten Weiterbildung der Erfindung ist alternativ vorgesehen, dass das zweite Ende des Elastomerelements eine Vertiefung, insbesondere eine konkav ausgebildete Wölbung aufweist. Damit weist das Elastomerelement eine ringförmige Kontaktfläche auf, welche zum Kontaktieren des Kolbens dient. Insbesondere ist vorgesehen, dass das Elastomerelement eine radiale Verjüngung unterhalb der Vertiefung aufweist, sodass ein scheibenförmiges oder tellerförmiges zweites Ende des Elastomerelements gebildet ist. Durch die Tellerform wird erreicht, dass die zuerst entgegenwirkende Federkraft besonders gering ist und dann mit zunehmendem Bewegungsweg des Kolbens plötzlich oder schlagartig erhöht wird, wenn der tellerförmige Abschnitt maximal verformt wurde.

Erfindungsgemäß ist vorgesehen, dass das Elastomerelement an seinem zweiten Ende eine erste Axialanschlagsfläche und wenigstens eine zweite Axialanschlagsfläche für den Kolben aufweist. Dies wird beispielsweise dadurch erreicht, dass an der Stirnseite des zweiten Endes ein Vorsprung ausgebildet ist, der von der Stirnseite vorsteht und einen Durchmesser aufweist, der kleiner ist als der des übrigen Elastomerelements, wie zuvor bereits erwähnt. Dadurch ergibt sich eine erste Axialanschlagsfläche an der Spitze des Vorsprungs und eine zweite Axialanschlagsfläche an der freien Stirnseite beziehungsweise der verbleibenden freien Stirnseite am zweiten Ende des Elastomerelements. Hierdurch wird beispielsweise erreicht, dass der Kolben bei seiner Betätigung zunächst nur eine Kraft über die erste Axialanschlagsfläche auf das Elastomerelement ausüben kann, und mit zunehmendem Bewegungsweg irgendwann auf die zweite Axialanschlagsfläche trifft und dann auch über diese eine weitere Kraft übertragen kann. Entsprechend erhöht sich die dem Kolben entgegenwirkende Federkraft zu dem Zeitpunkt, an welchem dieser auch die zweite Axialanschlagsfläche kontaktiert. Dadurch ist eine schlagartige Erhöhung der dem Kolben entgegenwirkenden Federkraft realisierbar.

Weiterhin ist erfindungsgemäß vorgesehen, dass der Kolben einen ersten Axialanschlag für die erste Axialanschlagsfläche und einen zweiten Axialänschlag für die zweite Axialanschlagsfläche aufweist. Durch die Ausbildung definierter Axialanschläge für die axialen Anschlagsflächen wird das Verhältnis zwischen Bewegungsweg und entgegenwirkender Federkraft genau definiert, wodurch sich weitere Vorteile bezüglich der Kraft-Weg-Kennlinie ergeben.

Erfindungsgemäß ist dazu vorgesehen, dass der erste Axialanschlag und der zweite Axialanschlag und die erste Axialanschlagsfläche und die zweite Axialanschlagsfläche jeweils axial beabstandet zueinander ausgebildet sind. Damit ist insbesondere jeweils die zweite Axialanschlagsfläche und der zweite Axialanschlag axial versetzt zu der ersten axialen Anschlagsfläche beziehungsweise dem zweiten Axialanschlag angeordnet, sodass eine Berührung von zweitem Axialanschlag und zweiter axialer Anschlagsfläche erst den gewünschten Zeitpunkt beziehungsweise zu einem bestimmten Verschiebungsweg des Kolbens erfolgt.

Gemäß einer nicht erfindungsgemäßen Weiterbildung ist vorgesehen, dass das Elastomerelement als Hülsenelement ausgebildet ist und damit einen axial durchgehenden Hohlraum aufweist. Hierdurch werden Material und Gewicht gespart, wobei je nach Wahl des Materials des Elastomerelements und je nach Anwendungsfall die dadurch verringerte Federkraft des Elastomerelements, die dem Kolben entgegenwirkt, noch ausreichend ist. Optional ist die zuvor bereits erwähnte zusätzliche Schraubenfeder in dem Hohlraum des Hülsenelements geführt.

Die erfindungsgemäße Bremseinrichtung mit den Merkmalen des Anspruchs 9 zeichnet sich durch den erfindungsgemäßen Bremskraftsimulator aus. Es ergeben sich hierdurch die bereits genannten Vorteile. Weitere Vorteile und bevorzugte Merkmale und Merkmalskombinationen ergeben sich insbesondere aus dem zuvor Beschriebenen sowie aus den Ansprüchen.

Im Folgenden soll die Erfindung anhand der Zeichnung näher erläutert werden. Dazu zeigen
- Figur 1: einen erfindungsgemäßen Bremskraftsimulator mit einem Elastomerelement in einer vereinfachten Längsschnittdarstell ung,
- Figuren 2A und 2B: eine alternative nicht erfindungsgemäße Ausführungsform des Elastomerelements,
- Figuren 3A und 3B: eine weitere nicht erfindungsgemäße Ausführungsform des Elastomerelements und
- Figuren 4A und 4B: eine weitere nicht erfindungsgemäße Ausführungsform des Elastomerelements, jeweils in einer Seitenansicht und in einer perspektivischen Darstellung.,

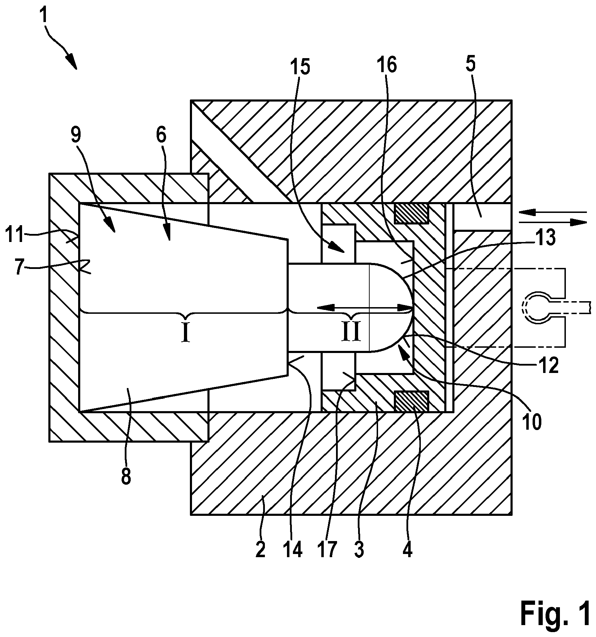

Figur 1 zeigt in einer vereinfachten Längsschnittdarstellung ein Bremskraftsimulator 1 einer hier nicht näher dargestellten Bremseinrichtung eines Kraftfahrzeugs. Der Bremskraftsimulator 1 ist dazu ausgebildet, in die als hydraulisch arbeitendes System ausgebildete Bremseinrichtung eingesetzt zu werden. Dazu weist der Bremskraftsimulator 1 einen Zylinder 2 auf, in welchem ein Kolben 3 axial verlagerbar angeordnet ist. Der Kolben 3 ist dabei außerdem durch wenigstens einen Dichtring 4 radial außen dicht an der Zylinderinnenwand des Zylinders 2 geführt angeordnet. Durch einen Druckanschluss 5 ist Hydraulikmedium in den Zylinder förderbar, wodurch der Kolben 3 in den Zylinder 2 axial verlagert wird. Der Druckanschluss 5 ist beispielsweise mit einem Hauptbremszylinder der Bremseinrichtung hydraulisch gekoppelt. Alternativ ist vorteilhafterweise vorgesehen, dass der Kolben 3, wie durch gestrichelte Linien dargestellt, mechanisch mit einem Bremspedal der Bremseinrichtung gekoppelt ist, sodass der Kolben 3 durch mechanische Betätigung in dem Zylinder 2 verschoben wird.

In dem Zylinder 2 ist weiterhin ein Federelement 6 angeordnet, das sich an einem Boden 7 des Zylinders 2 einerseits und an dem Kolben 3 andererseits abstützt, sodass es zwischen diesen beiden elastisch verspannbar ist. Wird der Kolben 3 hydraulisch oder mechanisch mit einer Bremskraft durch den Fahrer des Kraftfahrzeugs beaufschlagt, so wird er gegen das Federelement 6 bewegt, sodass die von dem Federelement 6 zur Verfügung gestellte Federkraft der Bewegung des Kolbens 3 entgegenwirkt. Vorliegend ist das Federelement 6 als Elastomerelement 8 ausgebildet, das insbesondere aus Polyurethan oder aus Ethylen-Propylen-Dien-Kautschuk gefertigt ist.

Das Elastomerelement 8 ist zylinderförmig ausgebildet und weist dazu im Längsschnitt gesehen einen ersten Abschnitt I mit kegelstumpfförmiger Kontur und einen zweiten Abschnitt II mit einer kugelstumpfförmigen Kontur auf. Der erste Abschnitt I bildet ein erstes Ende 9, das sich an dem Zylinder 2 beziehungsweise an dessen Boden 7 abstützt. Der von dem ersten Abschnitt I vorstehende zweite Abschnitt II bildet ein zweites Ende 10, das dem Kolben 3 zugeordnet ist.

Die Stirnseite 11 des Elastomerelements 8 ist an dem ersten Ende 9 eben und orthogonal zur Längsmittelachse des Elastomerelements 8 ausgebildet, sodass dieses mit dem ersten Ende 9 flächig an dem Boden 7 des Zylinders 2 aufliegt. Die verbleibende Stirnseite 12 des Elastomerelements 8, welche dem Kolben 3 zugeordnet ist, ist kugelförmig ausgebildet und liegt damit in der in Figur 1 gezeigten Ausgangsstellung mit einer nur geringen Fläche oder punktförmig an dem Kolben 3 an. Die Stirnseite 12 bildet insofern eine erste Axialanschlagsfläche 13, die sich in Abhängigkeit von der Anpresskraft des Kolbens 3 beziehungsweise vom Verschiebeweg des Kolbens 3 vergrößert. Weil der Abschnitt II insgesamt einen kleineren Durchmesser als der erste Abschnitt I des Elastomerelements 8 aufweist, bildet dieses außerdem eine zweite Axialanschlagsfläche 14, die radial außerhalb der ersten Anschlagsfläche 13 liegt.

Der Kolben 3 weist an seiner dem Elastomerelement 8 zugewandten Seite eine stufenförmige Vertiefung auf, die mittig einen ersten Axialanschlag 16 aufweist, und radial außen dazu einen zweiten Axialanschlag 17, der der zweiten Axialanschlagsfläche 14 derart zugeordnet ist, sodass dann, wenn der Kolben 3 entsprechend weit in Richtung des Elastomerelements 8 verschoben wird, der zweite Axialanschlag 17 auf die zweite Axialanschlagsfläche 14 trifft.

Insgesamt wird hierdurch ein Pedalkraftsimulator 1 zur Verfügung gestellt, der eine vorteilhafte Kraft-Weg-Kennlinie aufweist und darüber hinaus bauraumsparend ausgebildet ist und eine hohe Lebensdauer gewährleistet.

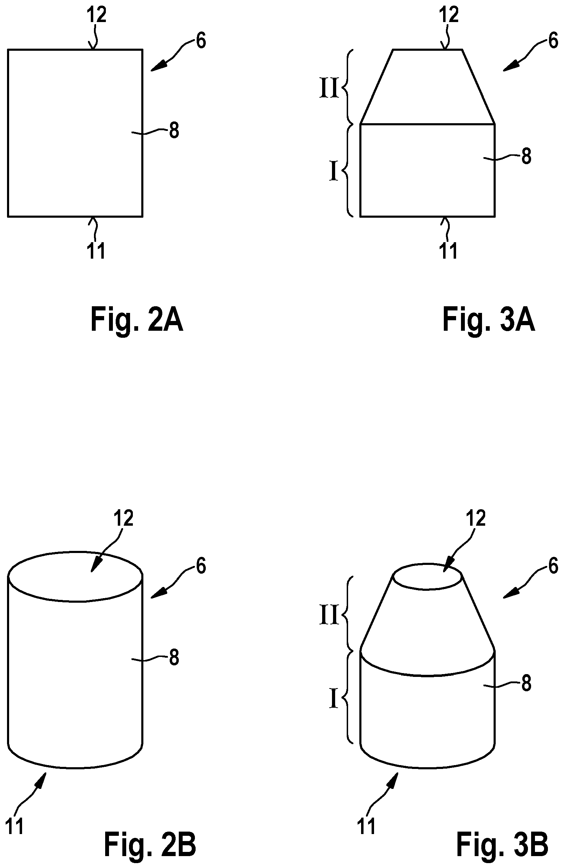

Figuren 2 bis 4 zeigen unterschiedliche nicht erfindungsgemäße Ausführungsbeispiele des Elastomerelements 8, jeweils in einer Seitenansicht und in einer perspektivischen Darstellung.

Figuren 2A und 2B zeigen dazu das Elastomerelement 8 gemäß eines ersten nicht erfindungsgemäßen Ausführungsbeispiels, bei welchem das Elastomerelement 8 insgesamt als Zylinderkörper ausgebildet ist. Dies stellt eine besonders kostengünstige Ausführungsform dar. Zweckmäßigerweise ist der Kolben 3 derart an die Form des Elastomerelements 8 angepasst, dass dieses flächig mit der Stirnseite 12 an dem Kolben 3 zur Anlage kommt oder bereits vorgespannt in Ausgangsstellung an diese anliegt.

Figuren 3A und 3B zeigen ein zweites nicht erfindungsgemäßes Ausführungsbeispiel, bei welchem der erste Abschnitt I zylinderförmig und der zweite Abschnitt II des Elastomerelements 8 kegelstumpfförmig ausgebildet ist. Damit weist das Elastomerelement 8 ebenfalls eine ebene Stirnfläche 12 zur Anlage an den Kolben 3 auf, gewährleistet jedoch aufgrund der kegelstumpfförmigen Ausbildung des Abschnitts 2 eine verbesserte Federkraft-Weg-Kennlinie des Elastomerelements 8, wobei insbesondere bei einem geringen Bewegungsweg des Kolbens 3 ausgehend von seiner Ausgangsstellung gemäß Figur 1 zunächst eine geringe Federkraft verwenden muss.

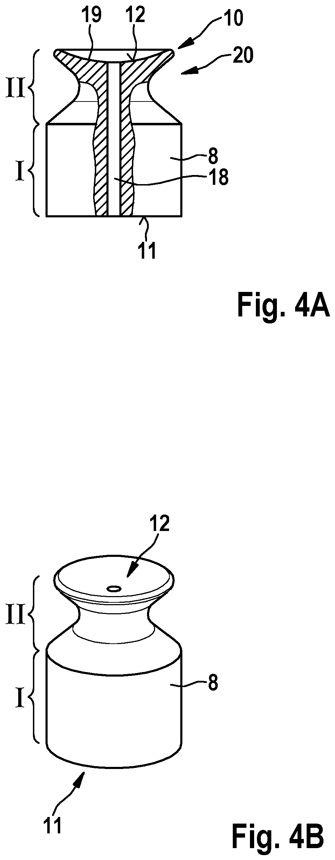

Figuren 4A und 4B zeigen ein weiteres nicht erfindungsgemäßes Ausführungsbeispiel des Elastomerelements 8, das gemäß diesem Ausführungsbeispiel hülsenförmig mit einem axial durchgehenden Hohlraum 18 ausgebildet ist. Der erste Abschnitt I ist erneut zylinderförmig ausgebildet. Der zweite Abschnitt II weist an der Stirnseite 12 eine Vertiefung 19 in Form einer konkaven Einwölbung auf. Zwischen dem Abschnitt I und der Stirnseite 12 weist das Elastomerelement 8 außerdem eine Durchmesser- oder Radialverjüngung 20 auf, wodurch das dem Kolben 3 zugewandte Ende 10 die Form einer Tellerfeder erhält. Hierdurch ergeben sich weitere vorteilhafte Eigenschaften des Elastomerelements 8 in dem Pedalkraftsimulator 1, insbesondere in Bezug auf die Federkraft-Weg-Kennlinie. Der Hohlraum 18 kann beispielsweise dazu genutzt werden, eine zusätzliche Schraubenfeder in dem Pedalkraftsimulator 1 anzuordnen und zu führen, welche eine zusätzliche auf den Kolben 3 wirkende Federkraft bereitstellt.

## Patentansprüche

1. Bremskraftsimulator (1) für ein Kraftfahrzeug, mit einem Kolben (3), der mit einem betätigbaren Bremspedal wirkverbunden/wirkverbindbar und in einem Zylinder (2) axial verschiebbar geführt ist, wobei in dem Zylinder (2) wenigstens ein Federelement (6) angeordnet ist, das der Bewegung des Kolbens (3) in eine Richtung mit einer Federkraft entgegenwirkt, wobei das Federelement (6) als Elastomerelement (8) ausgebildet ist, das mit einem ersten Ende (9) flächig an einem Boden (7) des Zylinders (2) anliegt, **dadurch gekennzeichnet, dass** das Elastomerelement (8) an seinem zweiten Ende (10) eine erste und wenigstens eine zweite axiale Anschlagsfläche (13,14) für den Kolben (3) aufweist, und das der Kolben (3) einen ersten Axialanschlag (16) für die erste Anschlagsfläche (13) und wenigstens einen zweiten Axialanschlag (17) für die zweite Anschlagsfläche (14) des Elastomerelements (8), aufweist, wobei die erste Axialanschlagsfläche (13) und die zweite Axialanschlagsfläche (14) und der erste Axialanschlag (16) und der zweite Axialanschlag (17) jeweils axial beabstandet zueinander ausgebildet sind, sodass eine Berührung von zweitem Axialanschlag (17) und zweiter Axialanschlagsfläche (14) erst zu einem bestimmten Verschiebeweg des Kolbens (3) erfolgt.

2. Bremskraftsimulator nach Anspruch 1, **dadurch gekennzeichnet, dass** das Elastomerelement (8) zumindest im Wesentlichen aus Ethylen-Propylen-Dien-Kautschuk und/oder aus Polyurethan gefertigt ist.

3. Bremskraftsimulator nach einem der vorhergehenden Ansprüche, **dadurch gekennzeichnet, dass** das Elastomerelement (8) zylinderförmig ausgebildet und koaxial in dem Zylinder (2) angeordnet ist.

4. Bremskraftsimulator nach einem der vorhergehenden Ansprüche, **dadurch gekennzeichnet, dass** das Elastomerelement (8) im Längsschnitt betrachtet einen ersten Abschnitt (I) mit kegelstumpfförmiger Kontur und einen zweiten Abschnitt (II) mit kugelstumpfförmiger Kontur aufweist, wobei der erste Abschnitt (I) das erste Ende (9) und der von dem ersten Abschnitt (I) vorstehende zweite Abschnitt (II) das zweite Ende (10) bildet.

5. Bremskraftsimulator nach einem der vorhergehenden Ansprüche, **dadurch gekennzeichnet, dass** eine erste Stirnseite (11) an dem ersten Ende (9) des Elastomerelements (8) eben und orthogonal zu einer Längsachse des Elastomerelements (8) ausgebildet ist.

6. Bremskraftsimulator nach einem der vorhergehenden Ansprüche, **dadurch gekennzeichnet, dass** das zweite Ende (10) kugelförmig ausgebildet ist.

7. Bremskraftsimulator nach Anspruch 4, **dadurch gekennzeichnet, dass** das Elastomerelement (8) zur Ausbildung der zweiten Axialanschlagsfläche (14) in dem zweiten Abschnitt (II) insgesamt einen kleineren Durchmesser aufweist als in dem ersten Abschnitt (I).

8. Bremskraftsimulator nach einem der Ansprüche 4 und 7, **dadurch gekennzeichnet, dass** der Kolben (3) an seiner dem Elastomerelement (8) zugewandten Seite eine stufenförmige Vertiefung aufweist, die mittig den ersten Axialanschlag (16) und radial außen dazu den zweiten Axialanschlag (17) aufweist.

9. Bremseinrichtung für ein Kraftfahrzeug, mit einem Bremspedal, das mit einem Bremskraftsimulator nach einem der Ansprüche 1 bis 8 wirkverbunden ist.

## Claims

1. Braking force simulator (1) for a motor vehicle, having a piston (3) which is or can be operatively connected to an actuatable brake pedal and is axially displaceably guided in a cylinder (2), wherein the cylinder (2) has arranged therein at least one spring element (6) which counteracts the movement of the piston (3) in one direction with a spring force, wherein the spring element (6) is designed as an elastomer element (8) which has a first end (9) bearing flat against a bottom (7) of the cylinder (2), **characterized in that** the elastomer element (8) has, at its second end (10), a first and at least one second axial stop surface (13, 14) for the piston (3), and **in that** the piston (3) has a first axial stop (16) for the first stop surface (13) and at least one second axial stop (17) for the second stop surface (14) of the elastomer element (8), wherein the first axial stop surface (13) and the second axial stop surface (14) and the first axial stop (16) and the second axial stop (17) are each designed to be axially spaced apart from one another, with the result that contact between the second axial stop (17) and second axial stop surface (14) occurs only at a determined displacement travel of the piston (3).

2. Braking force simulator according to Claim 1, **characterized in that** the elastomer element (8) is at least substantially manufactured from an ethylenepropylene-diene rubber and/or from polyurethane.

3. Braking force simulator according to either of the preceding claims, **characterized in that** the elastomer element (8) is cylindrical in form and arranged coaxially in the cylinder (2).

4. Braking force simulator according to one of the preceding claims, **characterized in that**, as viewed in longitudinal section, the elastomer element (8) has a first portion (I) with a frustoconical contour and a second portion (II) with a frustospherical contour, wherein the first portion (I) forms the first end (9), and the second portion (II), which projects from the first portion (I), forms the second end (10).

5. Braking force simulator according to one of the preceding claims, **characterized in that** a first end side (11) on the first end (9) of the elastomer element (8) is designed to be planar and orthogonal to a longitudinal axis of the elastomer element (8).

6. Braking force simulator according to one of the preceding claims, **characterized in that** the second end (10) is spherical in form.

7. Braking force simulator according to Claim 4, **characterized in that**, to form the second axial stop surface (14), the elastomer element (8) has, in the second portion (II), overall a smaller diameter than in the first portion (I).

8. Braking force simulator according to one of Claims 4 and 7, **characterized in that** the piston (3) has, at its side facing the elastomer element (8), a step-shaped depression which has the first axial stop (16) in a central position and the second axial stop (17) radially outwardly thereto.

9. Braking device for a motor vehicle, having a brake pedal which is operatively connected to a braking force simulator according to one of Claims 1 to 8.

## Revendications

1. Simulateur de force de freinage (1) pour véhicule automobile, comprenant un piston (3) qui est ou peut être mis en liaison fonctionnelle avec une pédale de frein actionnable et qui est guidé de manière à pouvoir être déplacé axialement dans un cylindre (2), dans lequel dans le cylindre (2) est disposé au moins un élément faisant ressort (6) qui agit avec une force de ressort à l'encontre du déplacement du piston (3) dans une direction, dans lequel l'élément faisant ressort (6) est réalisé sous la forme d'un élément élastomère (8) qui est appliqué par une première extrémité (9) de manière plane à un fond (7) du cylindre (2), **caractérisé en ce que** l'élément élastomère (8) présente à sa deuxième extrémité (10) une première et au moins une deuxième surface de butée axiale (13, 14) pour le piston (3), et **en ce que** le piston (3) présente une première butée axiale (16) pour la première surface de butée (13) et au moins une deuxième butée axiale (17) pour la deuxième surface de butée (14) de l'élément élastomère (8), dans lequel la première surface de butée axiale (13) et la deuxième surface de butée axiale (14) et la première butée axiale (16) et la deuxième butée axiale (17) sont respectivement réalisées à distance axiale l'une par rapport à l'autre, de sorte qu'un contact entre la deuxième butée axiale (17) et la deuxième surface de butée axiale (14) n'a lieu qu'à une course de déplacement déterminée du piston (3).

2. Simulateur de force de freinage selon la revendication 1, **caractérisé en ce que** l'élément élastomère (8) est fabriqué au moins substantiellement en caoutchouc éthylène-propylène-diène et/ou en polyuréthane.

3. Simulateur de force de freinage selon l'une quelconque des revendications précédentes, **caractérisé en ce que** l'élément élastomère (8) est réalisé en forme de cylindre et est disposé coaxialement dans le cylindre (2).

4. Simulateur de force de freinage selon l'une quelconque des revendications précédentes, **caractérisé en ce que** l'élément élastomère (8), vu en coupe longitudinale, présente une première partie (I) à contour tronconique et une deuxième partie (II) à contour tronconique, la première partie (I) formant la première extrémité (9) et la deuxième partie (II) faisant saillie à partir de la première partie (I) formant la deuxième extrémité (10).

5. Simulateur de force de freinage selon l'une quelconque des revendications précédentes, **caractérisé en ce qu'**une première face frontale (11) est réalisée à la première extrémité (9) de l'élément élastomère (8) de manière plane et de manière orthogonale par rapport à un axe longitudinal de l'élément élastomère (8).

6. Simulateur de force de freinage selon l'une quelconque des revendications précédentes, **caractérisé en ce que** la deuxième extrémité (10) est réalisée de manière sphérique.

7. Simulateur de force de freinage selon la revendication 4, **caractérisé en ce que** l'élément élastomère (8) présente globalement un diamètre inférieur à celui dans la première partie (I) pour réaliser la deuxième surface de butée axiale (14) dans la deuxième partie (II).

8. Simulateur de force de freinage selon l'une quelconque des revendications 4 et 7, **caractérisé en ce que** le piston (3) présente sur son côté tourné vers l'élément élastomère (8) un creux à gradin qui présente au centre la première butée axiale (16) et radialement à l'extérieur par rapport à celle-ci la deuxième butée axiale (17).

9. Dispositif de freinage pour véhicule automobile, comprenant une pédale de frein mise en liaison fonctionnelle avec un simulateur de force de freinage selon l'une quelconque des revendications 1 à 8.
